# EUROPEAN PATENT APPLICATION

(11) **EP 1 193 908 A1**
(43) Date of publication of application: **03.04.2002**
(21) Application number: 00922965.9
(22) Date of filing: 02.05.2000
(51) Int. Cl.: H04L 12/28

(54) **ATM EXCHANGE AND ATM HIGH RELIABILITY CONTROL METHOD**

(71) Applicant: MITSUBISHI DENKI KABUSHIKI KAISHA, Tokyo 100-8310 (JP)
(72) Inventor: MURAKAMI, Ken, Chiyoda-ku, Tokyo 100-8310 (JP); YOKOTANI, Tetsuya, Chiyoda-ku, Tokyo 100-8310 (JP); ICHIHASHI, Tatsuki, Chiyoda-ku, Tokyo 100-8310 (JP)
(74) Representative: Pfenning, Meinig & Partner
(86) International application number: JP0002911
(87) International publication number: WO0184780

(57) **Abstract**

The ATM exchange has a duplex configuration monitor control section 4 composed of a main system and a spare system capable of executing a call process. Further, the control section has the protocol processing module 5 managing a call state for each call, connection control module 6 managing call information for each call, and the resource management module 7 managing a resource state of a whole apparatus. When a SVC call is taken over while setting for the SVC call is being done, the main system transmits a call state and call information to the spare system at a point of time when the SVC call is established. The spare system sets the received call state and the call information and updates the resource state. Moreover, when the SVC call is taken over at a point of time when the SVC call is released, the main system transmits call identifying information of the SVC call at the time when the SVC call is released. The spare system deletes the call state and the call information shown by the received call identifying information and updates the resource state.

## Description

### TECHNICAL FIELD

The present invention relates to an ATM exchange which is capable of providing SVC (Switched Virtual Channel) service in an ATM (Asynchronous Transfer Mode) network. More specifically, this invention relates to the ATM exchange which is capable of allowing a spare system to take over SVC call from a main system, and a reliability improvement method of correctly maintaining the SVC call at the time of taking-over.

### BACKGROUND ART

In a conventional ATM exchange which is capable of providing SVC service, as a reliability improvement method of correctly maintaining SVC call at the time of taking-over the SVC call, Japanese Patent Application Laid-Open No. 10-84354, for example, discloses "DUPLEX CONTROL METHOD OF ATM EXCHANGE". The ATM exchange has, for example, a duplex-configured monitor control section so as to take over SVC connection information correctly.

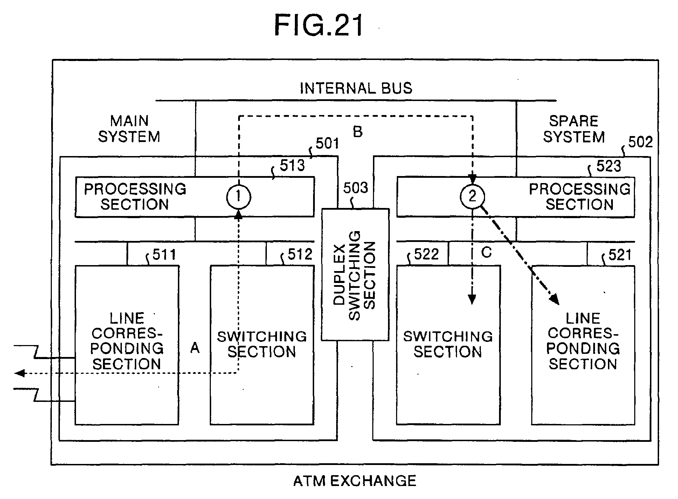

Fig. 21 is a diagram showing a structure of the ATM exchange disclosed in the above publication. Reference numeral 501 denotes a structure of a main system, 502 denotes a structure of a spare system, 503 denotes a duplex switching section, 511 denotes a line corresponding section of the main system, 512 denotes a switch section of the main system, 513 denotes a processing section of the main system, 521 denotes a line corresponding section of the spare system, 522 denotes a switching section of the spare system, and 523 denotes a processing section of the spare system.

In this ATM exchange, SVC call information is formed in the main system into a structure necessary for setting paths in the spare system, and the structure is transmitted to the spare system successively. Meanwhile, the spare system reproduces the SVC call information from the transferred structure, and sets paths based on the SVC call information.

There will be concretely explained below a method of taking over the SVC call in the ATM exchange . The processing section 513 of the main system 501 exchanges signaling message with an adjacent ATM exchange (A), and forms SVC information created upon this exchanging into a structure which is composed only of "information necessary for setting a path" necessary for reproducing it in the spare system 502 (1), and transfers the structure via an internal bus to the processing section 523 of the spare system (B). The spare system processing section 523 reproduces the information necessary for setting path from the transferred structure (2), and sets paths for the line corresponding section 521 and the switching section 522 of the preliminary section 502 (C).

In the conventional ATM exchange disclosed in the publication, even if the main system is switched to the spare system due to some reason, on-connecting SVC call can be maintained.

However, in the above-mentioned conventional example, the structure composed only of "information necessary for setting path" is transferred, and the SVC call is released upon exchanging signaling message at the time of completion of communication. At this time, in a signaling protocol termination process, a process is executed based on state transition. For this reason, when the on-connecting SVC call is released after the completion of switching as mentioned above, the processing section which receives release requesting message does not take over a call state of the SVC call, namely, the SVC call remains in the main system. For this reason, there arises a problem that the protocol process thereinafter cannot be continued correctly.

Further, generally the ATM exchange makes a connection admission control (CAC) in the SVC call setting process, and judges as to whether or not a resource (bandwidth) and communication quality which are required for the SVC call to be set can be provided. For this reason, in the ATM exchange, it is necessary to manage the resource state at least. However, in the ATM exchange disclosed in the above publication, the processing section of the spare system does not take over the information necessary for updating the resource state. For this reason, there arises a problem that the connection admission control cannot be made based on the actual resource state in setting of the SVC call after switching.

The present invention is devise in order to solve the above problems. It is an object of this invention to provide an ATM exchange, in which even if the main system is switched to the spare system due to some reason, for example, on-connecting SVC call is maintained and simultaneously a protocol process and connection admission control after the switching can be controlled correctly, and a reliability improvement method which is capable of accurately maintaining SVC call.

### DISCLOSURE OF THE INVENTION

An ATM exchange of the present invention comprises a monitor control unit having a duplex configuration composed of a main system and a spare system capable of executing a call process, wherein said monitor control unit includes a protocol processing module which manages a call state for each call and executing a protocol process for these calls; a connection control module which manages call information composed of logical information and physical information and request resource information of a user connection for each call; and a resource management module which manages a resource state of a whole apparatus. When a SVC call is taken over at the time of setting the SVC call, said main system transmits the call state and the call information to said spare system at a point of time when the SVC call is established, and said spare system sets the received call state and call information and updates a resource state based on the resource information included in the call information. When the SVC call is taken over at a point of time when the SVC call is released, said main system transmits call identifying information of the SVC call at a point of time when the SVC call is released, and said spare system deletes the call state and the call information shown by the received call identifying information and updates the resource state based on the resource information included in the call identifying information.

According to this invention, when the SVC call is switched due to some reason, in addition to the same SVC connection information as the conventional one, the call state and the resource information are also taken over at the time of setting or releasing call. For this reason, the SVC call can be maintained and also the protocol process thereafter and the CAC control can be also controlled correctly.

The ATM exchange of the present invention further comprises a scheduler which distributes the call state and the call information. Furthermore, in the main system which receives call process request message, the scheduler stores the message thereinto and instructs the protocol process, and at the time when the call process is completed, transmits the stored call process request message to the spare system. On the other hand, in the spare system, the scheduler which receives the message updates the call state, the call information and the resource information according to the same protocol process as the main system.

According to this invention, the main system monitor control unit and the spare system monitor control unit execute the same signaling process so as to be capable of executing a call taking-over process at the time of setting SVC call and a call taking-over process at the time of releasing SVC call.

The ATM exchange of a present invention performs following functions when the main system receives monitor control section switching instruction. That is, in the main system, the protocol processing module does not admit all messages other than one from the connection control module, and when a call is generated during setting, the connection control module actuates a releasing process for the call, and when a call is generated during release, continues the releasing process for the call. On the other hand, and in the spare system, after all the call processes are completed, a switching process is executed in the state that a on-processing call does not exist.

According to this invention, at the time when the on-processing SVC call does not exist, the process of the main system monitor control unit is ended, and forcible switching instruction is posted to the spare system monitor control unit, and the spare system monitor control unit starts an operation as main system monitor control unit. At this time, the protocol processing module of the main system monitor control unit disposes all new messages other than one from the connection control module . The main system monitor control unit executes only a process relating to on-processing SVC call. As a result, the SVC call can be switched in a stable state.

The ATM exchange of a next invention performs following functions when the main system receives monitor control section switching instruction. That is, in the main system, the protocol processing module does not admit all messages, and when a call is generated during setting and release, clears the call state and posts call identifying information of the released call to the spare system, and when a call is generated during setting, the connection control module actuates a releasing process for the call, and when a call is generated during release, continues the releasing process for the call. On the other hand, and after all the call processes are completed, in the spare system, a switching process is executed in the state that on-processing call does not exist.

According to this invention, at the time when the on-processing SVC call does not exist, the process of the main system monitor control unit is ended, and forcible switching instruction is posted to the spare system monitor control unit, and the spare system monitor control unit starts an operation as main system monitor control unit. At this time, the protocol processing module of the main system monitor control unit disposes all new messages. The main system monitor control unit executes only a process relating to on-processing SVC call. As a result, the SVC call can be switched in a stable state.

The ATM exchange of a next invention further comprises an apparatus management module which manages a corresponding relationship between logical information and physical information of a virtual path (VP) and managing a pair state of all set virtual paths. The ATM exchange is characterized in that at the time of setting, the connection control module makes an inquiry to the apparatus management module about the pair state of the virtual paths, and when a pair are set, allows call set request message for the resource management module to include virtual path information of both selection system and non-selection systems, and at the time of releasing the call, the connection control module executes the inquiry, and when the pair are set, allows call release request message for the resource management module to include the virtual path information of both the selection system and non-selection system, and the resource management module sets/releases the call for the virtual paths of both the selection system and non-selection system.

According to this invention, SVC connection is set for VPs of both the pair-set selection system and non-selection system so that SVC call can be maintained after VP is switched. Further, SVC connection is released for VPs of both the pair-set selection system and non-selection system so that omission of connection release can be avoided.

In the ATM exchange of a next invention, when the pair are set during the call setting after the inquiry, the connection control module receives call set response message from the resource management module, and executes the same inquiry again, and allows the call set request message for the resource management module to include the virtual path information of the non-selection system. Moreover, when the pair are set during releasing of the call setting after the inquiry, the connection control module receives call release response message from the resource management module and executes the inquiry again, and allows the call release request message for the resource management module to include the virtual path information of the non-selection system.

According to this invention, when the pair are set during setting or releasing SVC call, the inquiry is carried out again so that the setting can reflect taking-over of call.

In the ATM exchange of a next invention, the resource management module manages pair states of set all virtual paths, and at the time of setting call, when the pair of the virtual paths are set, sets the call in the virtual paths of both selection system and non-selection system, and at the time of releasing the call, when the pair of the virtual paths are set, releases the call of the virtual paths of both the selection system/non-selection system.

According to this invention, SVC connection is set for VPs of both the pair-set selection system and non-selection system so that SVC call can be maintained after VP is switched. Further, the SVC connection is released for the VPs of both the pair-set selection system and non-selection system so that omission of connection release can be avoided.

The reliability improvement method of a next invention is executed on an ATM exchange having a duplex configuration monitor control section composed of a main system and a spare system capable of executing a call process. This method comprises the first transmission step of, when SVC call is taken over at the time of setting the SVC call, allowing the main system to transmit call information including a call state and resource information to the spare system at a point of time when the SVC call is established; the first updating step of allowing the spare system to set the received call state and call information and update a resource state based on the resource information included in the call information; the second transmission step of, when SVC call is taken over at a point of time when the SVC call is released, allowing the main system to transmit call identifying information of the call at the time when the SVC call is released; and the second updating step of allowing the spare system to delete a call state and call information shown by the received call identifying information and update the resource state based on the resource information included in the call identifying information.

According to this invention, for example, when the SVC call is switched due to some reason, in addition to the same SVC connection information as the conventional art, the call state and the resource information are also taken over at the time of setting or releasing call. For this reason, the SVC call can be maintained and also the protocol process thereafter and CAC control can be controlled correctly.

The reliability improvement method of a next invention further comprises the third transmission step of allowing the main system which receives call processing request message to store the message therein and instructs a protocol process, and at the time when the call process is completed, transmits the stored call processing request message to the spare system; and the third updating step of allowing the spare system which receives the message to updates the call state, the call information and the resource information according to the same protocol process as said main system.

According to this invention, the main system and the spare system execute the same signaling process so as to be capable of execute a call taking-over process at the time of setting SVC call and a call taking-over process at the time of releasing SVC call.

The reliability improvement method of a next invention further comprises the releasing step of, when said main system receives monitor control section switching instruction, allowing the main system not to admit all messages from a line, and when a call is established during the setting, to actuate a releasing process for the call, and when the call is established during the release, to continue the releasing process for the call; and the switching step of, after all the call processes are completed, allowing the spare system to execute a switching process in a state that the on-processing call does not exist.

According to this invention, at the time when the on-processing SVC call does not exist, the process of the main system is ended, and forcible switching instruction is posted to the spare system. The spare system starts an operation as a new main system. At this time, the main system disposes all new messages from the line, and executes only a process relating to on-processing SVC call. As a result, the SVC call can be switched in the stable state.

The reliability improvement method of a next invention further comprises the call setting step of, when the pair of the virtual paths are set at the time of setting call, setting call in virtual paths of both selection system and non-selection system; and the call releasing step of, when the pair of the virtual paths are set at the time of releasing call, releasing call of the virtual paths of both the selection system and non-selection system.

According to this invention, SVC connection is set for VPs of both the pair-set selection system and non-selection system so that the SVC call can be maintained after VP is switched. Further, the SVC connection is released for the VPs of both the pair-set selection system/non-selection system so that omission of connection release can be avoided.

### BRIEF DESCRIPTION OF THE DRAWINGS

Fig. 1 is a diagram showing a structure of an ATM exchange according to a first embodiment of the present invention; Fig. 2 is a diagram showing a B-BCC signaling procedure in point-to-point call; Fig. 3 is a diagram showing a signaling process flow in an access node (ATM exchange) at the time of setting SVC call; Fig. 4 is a diagram showing signaling process flow in the access node (ATM exchange) at the time of releasing SVC call; Fig. 5 is a diagram showing a concrete example of call information; Fig. 6 is a diagram for explaining taking-over of SVC call between a main system monitor control section 4a and a spare system monitor control section 4b when the SVC call is switched from a main system to a spare system due to some reason; Fig. 7 is a diagram showing a structure of the monitor control section according to a second embodiment; Fig. 8 is a diagram showing a signaling process flow in the access node at the time of setting SVC call; Fig. 9 is a diagram showing the signaling process flow in the access node at the time of releasing SVC call; Fig. 10 is a flow chart showing an operation of the main system monitor control section 4a when on-setting SVC call is forcibly switched; Fig. 11 is a diagram showing a structure of the monitor control section according to a fifth embodiment; Fig. 12 is a diagram showing a concept of a VP pair; Fig. 13 is a diagram showing a concrete example of call information 11 which is managed by a connection control module 6; Fig. 14 is a diagram showing the signaling process flow in the access node at the time of setting SVC call in the state that the VP pair are set; Fig. 15 is a diagram showing the signaling process flow in the access node at the time of releasing SVC call in the state that the VP pair are set; Fig. 16 is a diagram showing the signaling process flow in the access node at the time of setting the SVC call; Fig. 17 is a diagram showing the signaling process flow in the access node at the time of releasing SVC call; and Fig. 18 is a diagram showing a structure of the monitor control section according to the fifth embodiment; Fig. 19 is a diagram showing the signaling process flow in the access node at the time of setting SVC call; Fig. 20 is a diagram showing the signaling process flow in the access node at the time of releasing SVC; and Fig. 21 is a diagram showing a structure of a conventional ATM exchange.

### BEST MODE FOR CARRYING OUT THE INVENTION

The present invention will be explained below with reference to the accompanying drawings.

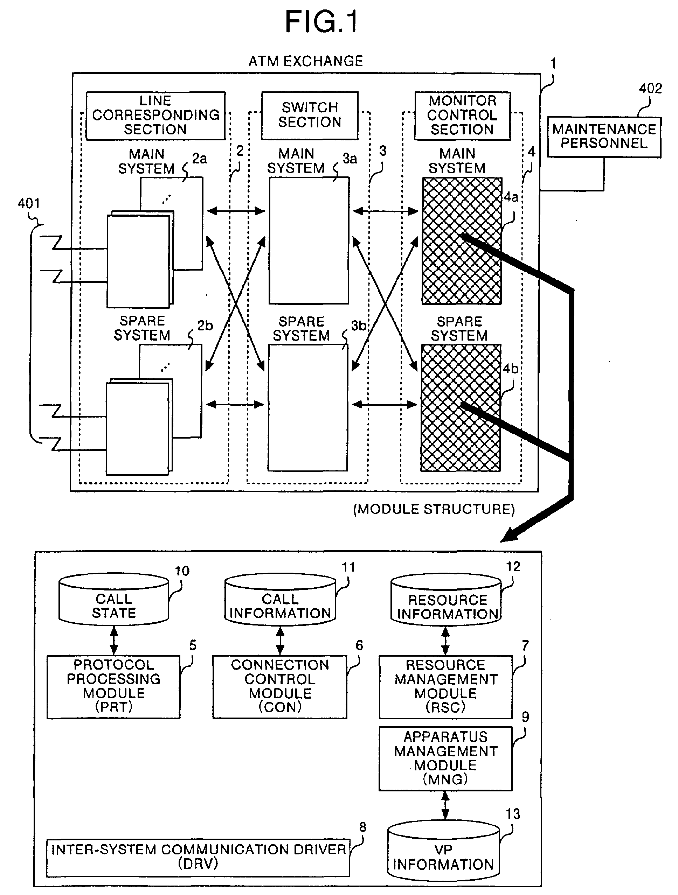

To begin with, a structure of an ATM exchange according to a first embodiment of the present invention will be explained below. Fig. 1 is a diagram showing the structure of the ATM exchange according to the first embodiment of the present invention. In Fig. 1, reference numeral 1 denotes the ATM exchange of the first embodiment. Moreover, reference numeral 2 denotes the line corresponding section for housing the line 401, 2a denotes the main system line corresponding section, and 2b denotes the spare system line corresponding section. Moreover, reference numeral 3 denotes the switch section for carrying out cell switching, 3a denotes the main system switch section, and 3b denotes the spare system switch section. Moreover, reference numeral 4 denotes the monitor control section including a call process function, 4a denotes the main system monitor control section, and 4b denotes the spare system monitor control section.

Further, the call process function of the monitor control section 4 is composed of the protocol processing module (PRT) 5, connection control module (CON) 6, and the resource management module (RSC) 7. The protocol processing module 5 manages a call state 10 in SVC call unit and executes a protocol process. The connection control module 6 manages call information 11 such as logical information of SVC connection in SVC call unit (VPCI: Virtual Path Channel Identifier/VCI: Virtual Channel Identifier), physical information (interface number/VPI: Virtual Path Identifier/VCI) and requesting resource information. The resource management module 7 manages resource information 12 of a whole apparatus and controls hardware in the apparatus for setting/releasing SVC connection. Moreover, an inter-system communication driver (DRV) 8 and an apparatus management module (MNG) 9 are incorporated into the main system 4a and the spare system 4b of the monitor control section 4. The inter-system communication driver 8 communicates via an internal bus . The apparatus management module 9 posts an instruction from maintenance personnel 402 to the respective modules in the monitor control section 4.

The apparatus management module 9 manages VP information 13 which holds a corresponding relationship between logical information (VPCI) and physical information (interface number + VPI) of a virtual path (VP) generated from the maintenance personnel 402. However, in Fig. 1, the line corresponding section 2 and the switch section 3 are also duplicated, but the present invention is not limited to this, namely, the present invention is not related with the duplication of these sections.

Further, in this first embodiment and embodiments explained thereafter, an attention is paid to "access node" composing an access network described in ITU-T recommendation G.902 "Framework Recommendation on functional access networks (AN) - Architecture and function, access types, management and service node aspects". Moreover, an example of the signaling protocol is "B-BCC (Broadband Bearer Connection Control)" defined in ITU-T recommendation G.967.2 "V-INTERFACES AT THE SERVICE NODE (SN) - VB5.2 REFERENCE POINT SPECIFICATION".

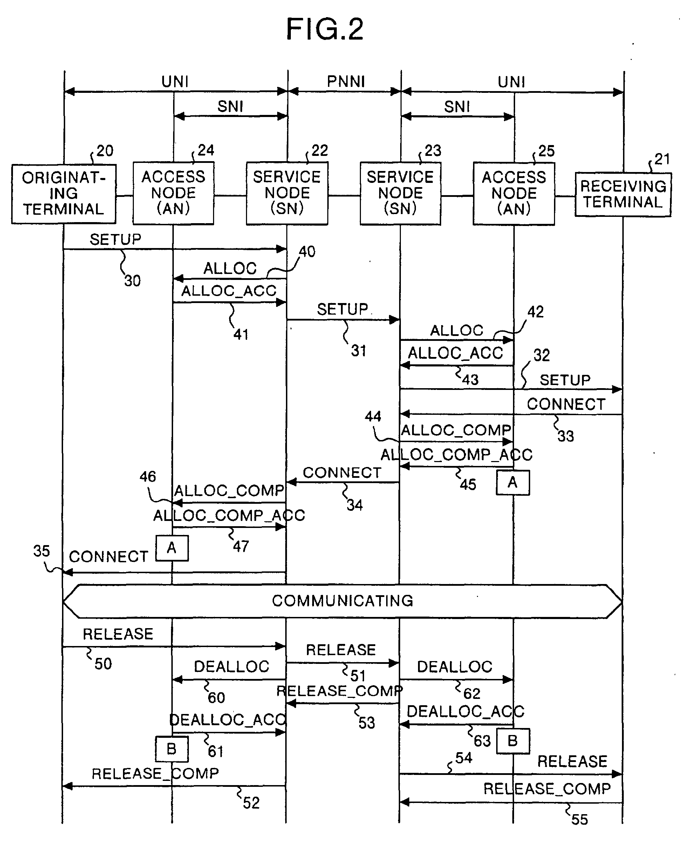

Fig. 2 is a diagram showing a B-BCC signaling procedure in point-to-point call. In Fig. 2, reference numeral 20 denotes the originating terminal, 21 denotes the receiving terminal, 22 denotes the service node (SN) on the originating side, and 23 denotes the service node (SN) on the receiving side. Moreover, reference numeral 24 denotes the access node (AN) on the originating side, and 25 denotes the access node (AN) on the receiving side. Fig. 2 shows signaling procedure when ATM forum UNI4.0 is applied as a signaling protocol of an user network interface (UNI) and ATM forum PNNI 1.0 is applied as a signaling protocol of a network node interface (NNI). However, when another UNI signaling protocols and NNI signaling protocols are applied, the B-BCC protocol procedure is common in an service node interface (SNI).

Assume, for example, that a SVC call is set between the originating terminal 20 and the receiving terminal 21. Then, the originating side SN22 which receives SETUP message 30 from the originating terminal 20 transmits ALLOC message 40 to the originating side AN 24. Information element contents of the ALLOC message 40 are determined based on information element contents of the SETUP message 30. The originating side AN24 executes an internal process for the ALLOC message 40, and when admissible, returns ALLOC_ACC message 41 to the originating side SN22. The originating side SN22 which receives the ALLOC_ACC message 41 transmits the SETUP message 31 to the receiving side SN23.

The receiving side SN23 which receives SETUP message 31 transmits ALLOC message 42 to the receiving side AN25. Information element contents of the ALLOC message 42 are determined based on information element contents of the SETUP message 31. The receiving side AN 25 executes an internal process for the ALLOC message 42, and when admissible, returns ALLOC_ACC message 43 to the receiving side SN23. The receiving side SN23 which receives the ALLOC_ACC message 43 transmits SETUP message 32 to the receiving terminal 21.

The receiving terminal 21 which receives the SETUP message 32 returns CONNECT message 33 to the receiving side SN23 when the call is admissible. The receiving side SN23 transmits ALLOC_COMP message 44 to the receiving side AN25. The receiving side AN25 executes an internal process for the ALLOC_COMP message 44, and when admissible, returns ALLOC_COMP_ACC message 45 to the receiving side SN23. The receiving side service node 23 which receives the ALLOC_COMP_ACC message 45 returns CONNECT message 34 to the originating side service node 22.

The originating side SN22 which receives the CONNECT message 34 transmits ALLOC_COMP message 46 to an originating side AN24. The originating side AN24 executes an internal process for the ALLOC_COMP message 46, and when admissible, returns ALLOC_COMP_ACC message 47 to the originating side SN22. The originating side SN22 which receives the ALLOC_COMP_ACC message 47 transmits CONNECT message 35 to the originating terminal 20.

In the above procedure, the SVC call is set between the originating terminal 20 and the receiving terminal 21 so that data can be transmitted.

Assume now that the SVC call between the originating terminal 20 and the receiving terminal 21 is released. Then, the originating side SN22 which receives RELEASE message 50 from the originating terminal 20 transmits RELEASE message 51 to the receiving side SN23 and transmits DEALLOC message 60 to the originating side AN24. The originating side AN24 executes an internal process for the DEALLOC message 60, and returns DEALLOC_ACC message 61 to the originating side SN22. The originating side SN22 which receives the DEALLOC_ACC message 61 transmits RELEASE_COMP message 52 to the originating terminal 20.

The receiving side SN23 which receives RELEASE message 51 transmits DEALLOC message 62 to the receiving side AN25, and returns RELEASE_COMP message 53 to the originating side SN22. The receiving side AN25 executes an internal process for the DEALLOC message 62, and returns DEALLOC_ACC message 63 to the receiving side SN23. The receiving side SN23 which receives the DEALLOC_ACC message 63 transmits RELEASE message 54 to the receiving terminal 21, and the receiving terminal 21 returns RELEASE_COMP message 55 to the receiving side SN23.

The SVC call between the originating terminal 20 and the receiving terminal 21 is released according to the above procedure so that the data transmission is completed.

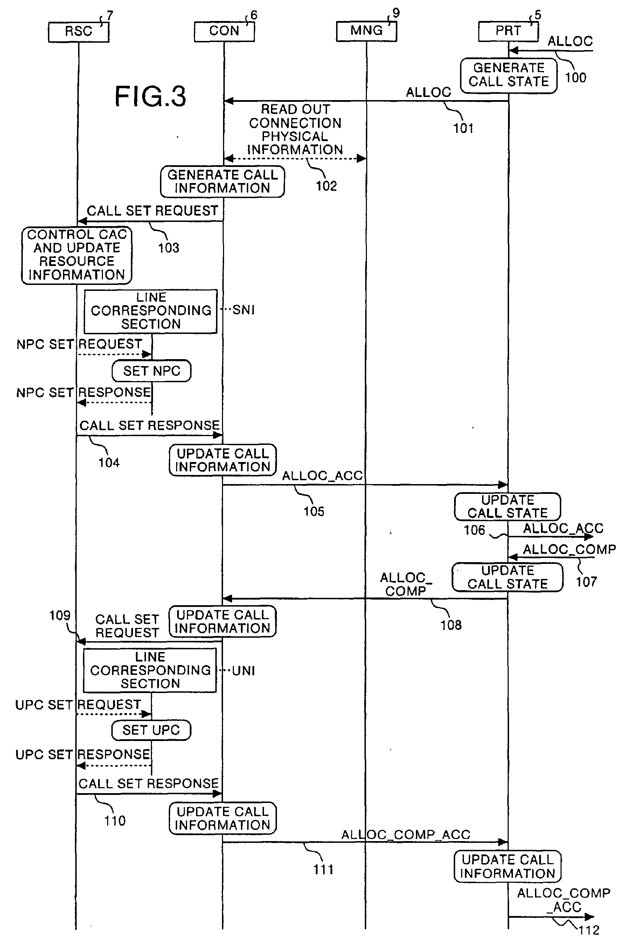

Fig. 3 is a diagram showing a signaling process flow in an access node (ATM exchange) at the time of setting SVC call. For example, when the SVC call is set, ALLOC message 100 received from the line 401 is transferred via the line corresponding section 2 and the switch section 3 to the main system monitor control section 4a. In the monitor control section 4a, the protocol processing module 5 generates a call state 10 of the SVC call according to the protocol process and transfers ALLOC message 101 to the connection control module 6.

The connection control module 6 reads logical information (VPCI/VCI) and connection physical information (interface number/VPI/VCI) 102 of SVC connection from the VP information 13 managed by the apparatus management module 9, and generates call information 11. The connection control module 6 transfers call set request 103 to the resource management module 7.

The resource management module 7 sets hardware of the line corresponding section 2 and the switch section 3 on the SNI side and updates the resource information 12 in order to control CAC and set SVC connection. At the stage that these processes are ended normally, the resource management module 7 transfers call set response 104 to the connection control module 6.

The connection control module 6 transfers ALLOC_ACC message 105 to the protocol processing module 5. The protocol processing module 5 updates the call state 10 and transmits ALLOC_ACC message 106 to the line 401.

ALLOC_COMP message 107 received from the line 401 is transferred via the line corresponding section 2 and the switch section 3 to the main system monitor control section 4a. In the monitor control section 4a, the protocol processing module 5 executes the protocol process and updates the call state 10, and transfers ALLOC_COMP message 108 to the connection control module 6.

The connection control module 6 updates the call information 11, and transfers call set request 109 to the resource management module 7. The resource management module 7 which receives the call set request 109 sets hardware of the UNI side line corresponding section 2 in order to set SVC connection. At the stage that this process is ended normally, the resource management module 7 transfers call set response 110 to the connection control module 6.

The connection control module 6 which receives the call set response 110 transfers ALLOC_COMP_ACC message 111 to the protocol processing module 5. The protocol processing module 5 updates the call state 10, and transmits ALLOC_COMP_ACC message 112 to the line 401.

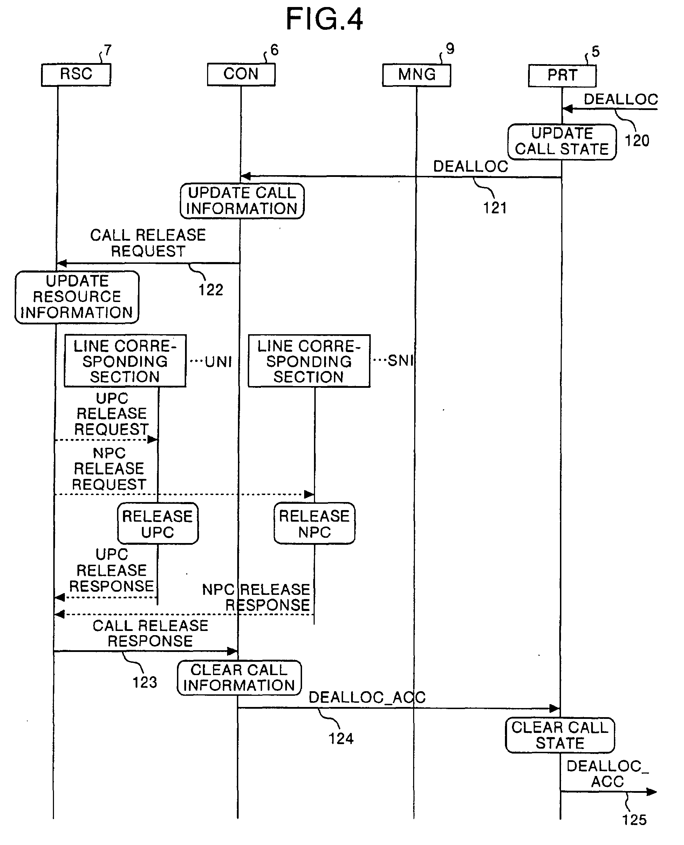

Fig. 4 is a diagram showing a signaling process flow in the access node (ATM exchange) at the time of releasing SVC calling. For example, when the SVC calling is released, DEALLOC message 120 received from the line 401 is transferred via the line corresponding section 2 and the switch section 3 to the main system monitor control section 4a. In the monitor control section 4a, the protocol processing module 5 updates the call state 10 of SVC calling according to the protocol process, and transfers DEALLOC message 121 to the connection control module 6.

The connection control module 6 updates the call information 11, and transfers call release request 122 to the resource management module 7. The resource management module 7 which receives the call release request 122 releases setting of the hardware of the line corresponding section 2 and the switch section 3 where SVC connection is set, and updates the resource information 12. At the stage that these processes are ended, the resource management module 7 transfers call release response 123 to the connection control module 6.

The connection control module 6 which receives the call release response 123 clears the call information 11, and transfers DEALLOC_ACC message 124 to the protocol processing module 5. The protocol processing module 5 which receives the DEALLOC_ACC message 124 clears the call state 10 and transmits DEALLOC_ACC message 125 to the line 401.

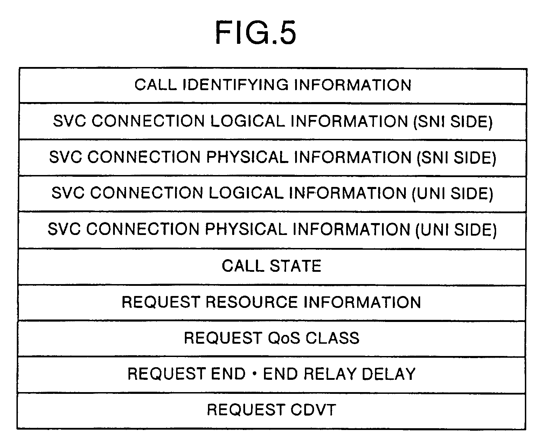

Fig. 5 is a diagram showing a concrete example of the call information 11. For example, the call information 11 is composed of call identifying information, SVC connection logical information (SNI side), SVC connection physical information (SNI side), SVC connection logical information (UNI side), SVC connection physical information (UNI side), a call state, request resource information, request QoS class, request end/end relay delay, request CDVT and the like.

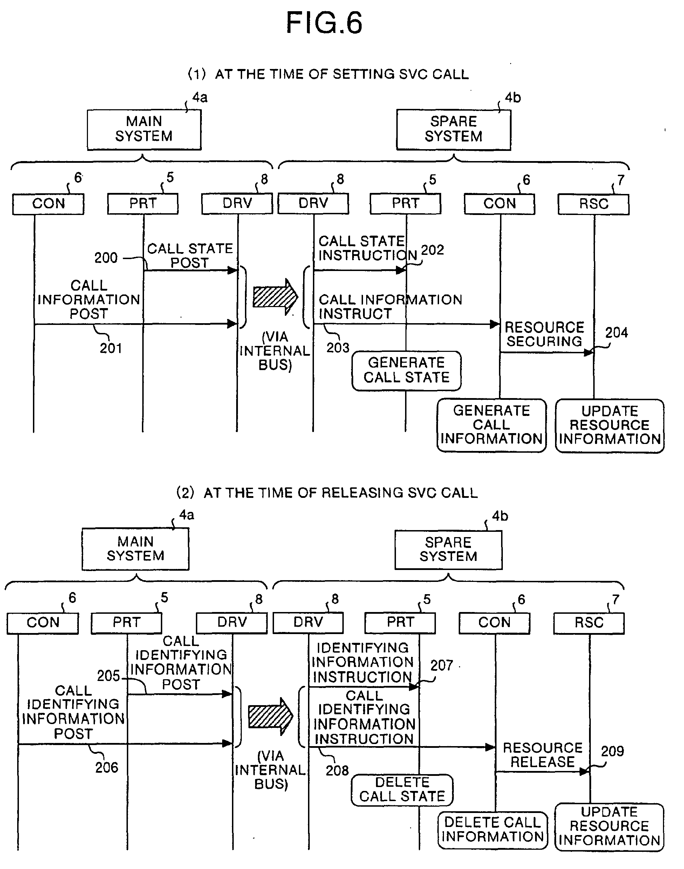

Fig. 6 is a diagram for explaining taking-over of SVC call between the main system monitor control section 4a and the spare system monitor control section 4b when the SVC call is switched from the main system into the spare system due to some reason. More concretely, Fig. 6(1) shows exchange of message between the monitor control sections at the time of setting SVC call. Fig. 6(2) shows exchange of message between the monitor control sections at the time of releasing SVC call.

For example, when the SVC call is taken over at the time of setting the SVC call (see Fig. 6(1)), at the time when SVC call is established in the signaling procedure of Fig. 2 mentioned above (corresponding to A of Fig. 2), the protocol processing module 5 in the main system monitor control section 4a transmits call state post 200 (call state instruction 202) including the call state 10 of the SVC call to the spare system control section 4b via the inter-system communication driver 8. Moreover, simultaneously the connection control module 6 transmits call information post 201 (call information instruction 203) including the call information 11 of the SVC call to the spare system monitor control section 4b via the inter-system communication driver 8.

The spare system monitor control section 4b which receives the respective posts transmits call state instruction 202 to the protocol processing module 5, and transmits call information instruction 203 to the connection control module 6. The protocol processing module 5 which receives the call state information 202 manages the call information 10. Meanwhile, the connection control module 6 manages the call information 11, and generates a resource securing signal 204 based on resource information included in the call information 11. The connection control module 6 transmits the signal 204 to the resource management module 7. Thereafter, the resource management module 7 which receives the resource securing signal 204 receives this post so as to update the resource state 12.

In this first embodiment, for example when the SVC call is switched due to some reason, the main system monitor control section allows the spare system monitor control section to take over call state and resource information as well as SVC connection information similar to the conventional art. For this reason, the SVC call can be maintained, and also the protocol process thereafter and CAC can be controlled correctly.

Meanwhile, when the SVC call is taken over at a point of time when the SVC call is released (see Fig. 6(2)), at the time when SVC call is released in the signaling procedure of Fig. 2, mentioned above (corresponding to B of Fig. 2), the protocol processing module 5 in the main system monitor control section 4a transmits call identifying information post 205 (call identifying information instruction 207) including call identifying information of the SVC call to the spare system monitor control section 4b via the inter-system communication driver 8. Moreover, the connection control module 6 transmits call identifying information post 206 (call identifying information instruction 208) including identifying information of the SVC call to the spare system monitor control section 4b via the inter-system communication driver 8.

The spare system monitor control section 4b which receives the respective posts transmits the call identifying information instructions 207 and 208 to the protocol processing module 5 and the connection control module 6 respectively. The protocol processing module 5 which receives the call identifying information instruction 207 clears the call state 10 of the SVC call based on internal call identifying information. Meanwhile, the connection control module 6 which receives the call identifying information instruction 208 clears the call information 11 based on internal call identifying information, and transmits resource release 209 including resource information of the call information 11 before clearing to the resource management module 7. Finally, the resource management module 7 which receives the resource release 209 updates the resource state 12.

In this first embodiment, for example, when the SVC call is switched due to some reason, the main system monitor control section allows the spare system monitor control section to take over call state and resource information as well as the SVC connection information similar to the conventional art at the time of releasing call. For this reason, the protocol process thereafter and CAC can be controlled correctly.

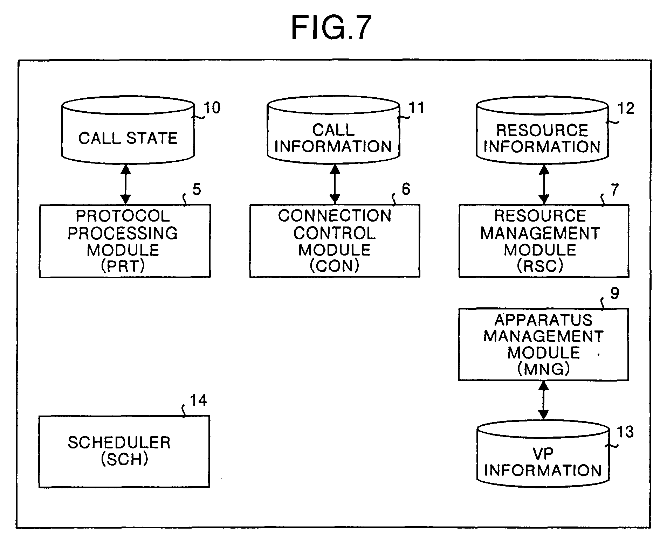

A second embodiment will be explained below. Fig. 7 is a diagram showing a structure of the monitor control section according to the second embodiment. In this second embodiment, instead of the aforementioned inter-system communication driver 8, a scheduler 14 is provided. Since the structure of the ATM exchange is the same as the first embodiment (see Fig. 1), the same reference numerals are given and the explanation thereof is omitted.

There will be explained in detail portions different from the aforementioned first embodiment.

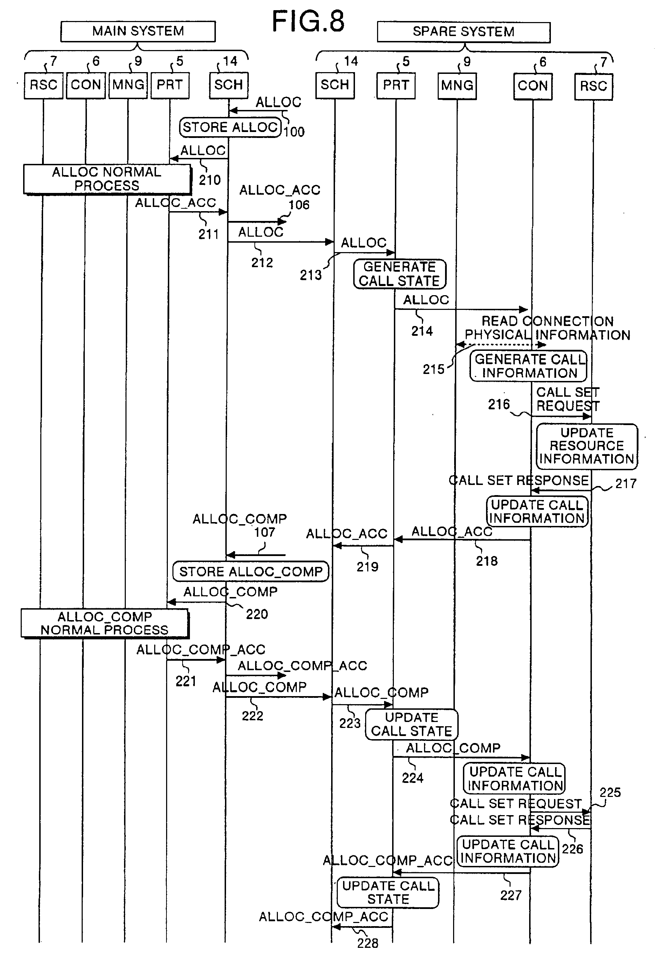

Fig. 8 is a diagram showing the signaling process flow in the access node at the time of setting the SVC call. For example, when the SVC call is set, the ALLOC message 100 received from the line 401 is transmitted via the line corresponding section 2 and the switch section 3 to the main system monitor control section 4a. In the monitor control section 4a, the scheduler 14 stores contents of the received ALLOC message 100 therein and transmits ALLOC message 210 to the protocol processing module 5.

The protocol processing module 5, the connection control module 6 and the resource management module 7 execute the ALLOC receiving processes (101 to 105) shown in Fig. 3. Thereafter, the protocol processing module 5 transmits ALLOC_ACC message 211 to the scheduler 14.

The scheduler 14 which receives ALLOC_ACC message 211 transmits ALLOC_ACC message 106 to the line 401, and transmits the contents of the ALLOC message 100 stored before as ALLOC message 212 to the spare system monitor control section 4b. This transmission may be carried out via the switch section 3 or an internal bus between the monitor control sections. However, it is necessary to previously set a path to the switch section 3 in the first case, whereas the inter-system communication driver 8 is additionally required in the latter case.

In the spare system monitor control section 4b which receives the ALLOC message 212, the scheduler 14 does not store contents of the ALLOC message 212 and transmits ALLOC message 213 to the protocol processing module 5. The protocol processing module 5 which receives the ALLOC message 213 generates the call state 10 according to the protocol process, and transmits ALLOC message 214 to the connection control module 6.

The connection control module 6 which receives ALLOC message 214 reads logical information (VPCI/VCI) and connection physical information (interface number/VPI/VCI) 102 of SVC connection from the VP information 13 managed by the apparatus management module 9 and generates call information 11. The connection control module 6 transmits call set request 216 to the resource management module 7.

The resource management module 7 which receives the call set request 216 controls CAC and updates the resource information 12 (setting of hardware of the line corresponding section 2 and the switch section 3 for setting SVC connection is not necessary), and transmits call set response 217 to the connection control module 6.

The connection control module 6 which receives the call set response 217 transmits ALLOC_ACC message 218 to the protocol processing module 5. The protocol processing module 5 updates the call state 10, and transmits ALLOC_ACC message 219 to the scheduler 14. The scheduler 14 disposes of the ALLOC_ACC message 219.

ALLOC_COMP message 107 received from the line 401 is transmitted via the line corresponding section 2 and the switch section 3 to the main system monitor control section 4a. In the monitor control section 4a, the scheduler 14 stores contents of the received ALLOC_COMP message 107, and transmits ALLOC_COMP message 220 to the protocol processing module 5.

The protocol processing module 5, the connection control module 6 and the resource management module 7 execute the ALLOC_COMP receiving process (108 to 111) of Fig. 3. Thereafter, the protocol processing module 5 transmits ALLOC_COMP_ACC message 221 to the scheduler 14.

The scheduler 14 which receives the ALLOC_COMP_ACC message 221 transmits ALLOC_COMP_ACC message 112 to the line 401, and transmits contents of the previously stored ALLOC_COMP message 107 as ALLOC_COMP message 222 to the spare system monitor control section 4b. This transmission may be carried out via the switch section 3 or the internal bus between the monitor control sections.

In the spare system monitor control section 4b which receives ALLOC_COMP message 222, the scheduler 14 does not store contents of the ALLOC_COMP message 222 thereinto, and transmits ALLOC_COMP message 223 to the protocol processing module 5.

The protocol processing module 5 which receives the ALLOC_COMP message 223 updates the call state 10 according to the protocol process, and transmits ALLOC_COMP message 224 to the connection control module 6. The connection control module 6 updates the call information 11, and transmits call set request 225 to the resource management module 7.

The resource management module 7 which receives the call set request 225 does not particularly carry out a process, and transmits call set response 226 to the connection control module 6. The connection control module 6 transmits ALLOC_COMP_ACC message 227 to the protocol processing module 5. The protocol processing module 5 updates the call state 10, and transmits ALLOC_COMP_ACC message 228 to the scheduler 14. Finally, the scheduler 14 disposes of the received ALLOC_COMP_ACC message 228.

When the main system monitor control section 4a fails to execute the ALLOC receiving process in the above sequence, the main system scheduler 14 transmits ALLOC_REJ message (rejecting message) to the line 401, and deletes the previously stored ALLOC message 100 so as not to carry out transmission to the spare system monitor control section 4b. Moreover, similarly, when the main system monitor control section 4a fails in the ALLOC_COMP receiving process, the main system scheduler 14 transmits ALLOC_COMP_REJ message (rejecting message) to the line 401, and deletes the previously stored ALLOC_COMP message 107 so as not to carry out transmission to the spare system monitor control section 4b.

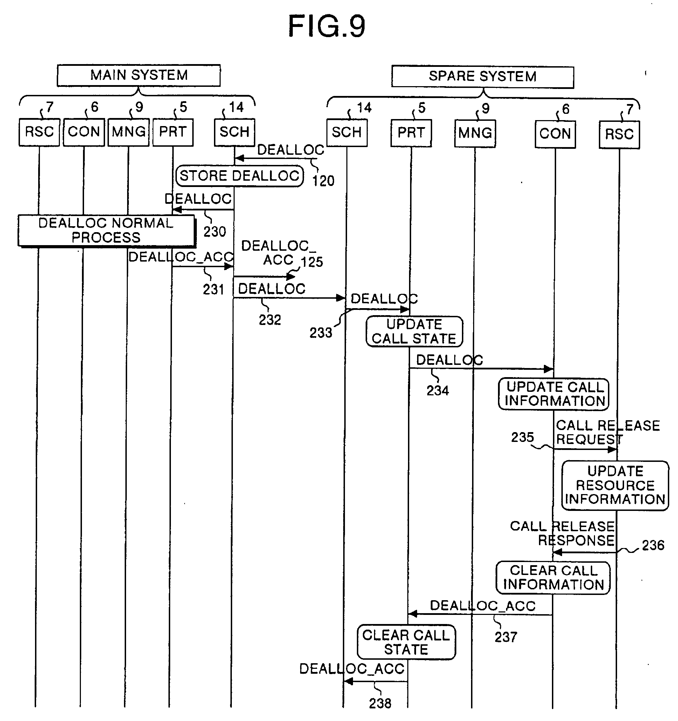

Fig. 9 is a diagram showing the signaling process flow in the access node at the time of releasing SVC call. For example, when the SVC call is released, DEALLOC message 120 received from the line 401 is transmitted via the line corresponding section 2 and the switch section 3 to the main system monitor control section 4a. In the monitor control section 4a, the scheduler 14 stores contents of DEALLOC message 120, and transmits DEALLOC message 230 to the protocol processing module 5.

The protocol processing module 5, the connection control module 6 and the resource management module 7 execute the DEALLOC receiving process (121 to 124) of Fig. 4. Thereafter, the protocol processing module 5 transmits DEALLOC_ACC message 231 to the scheduler 14.

The scheduler 14 transmits DEALLOC_ACC message 125 to the line 401, and transmits the contents of the previously stored DEALLOC message 120 as DEALLOC message 232 to the spare system monitor control section 4b. This transmission may be carried out via the switch section 3 or the internal bus between the monitor control section.

In the spare system monitor control section 4b which receives the DEALLOC message 232, the scheduler 14 does not stores contents of the DEALLOC message 232 and transmits the DEALLOC message 233 to the protocol processing module 5.

The protocol processing module 5 which receives the DEALLOC message 233 updates the call state 10 according to the protocol process, and transmits DEALLOC 234 to the connection control module 6. The connection control module 6 updates the call information 11 and transmits call release request 235 to the resource management module 7.

The resource management module 7 which receives the call release request 235 updates the resource information 12 (it is not necessary to release setting of the hardware of the line corresponding section 2 and the switch section 3 where SVC connection is set), and transmits call release response 236 to the connection control module 6. The connection control module 6 transmits DEALLOC_ACC message 237 to the protocol processing module 5, and clears the call information. The protocol processing module 5 clears the call state 10, and transmits DEALLOC_ACC message 238 to the scheduler 14. Finally, the scheduler 14 disposes of the received DEALLOC_ACC message 238.

The same effects as the first embodiment are obtained in this second embodiment. Moreover, the main system monitor control section 4a and the spare system monitor control section 4b execute the same signaling process (excludes control of the hardware of the line corresponding section and the switch section). As a result, the SVC call taking-over process at the time of setting SVC call and the SVC taking-over process at the time of releasing SVC call can be executed by using the same structure of the sections 4a and 4b.

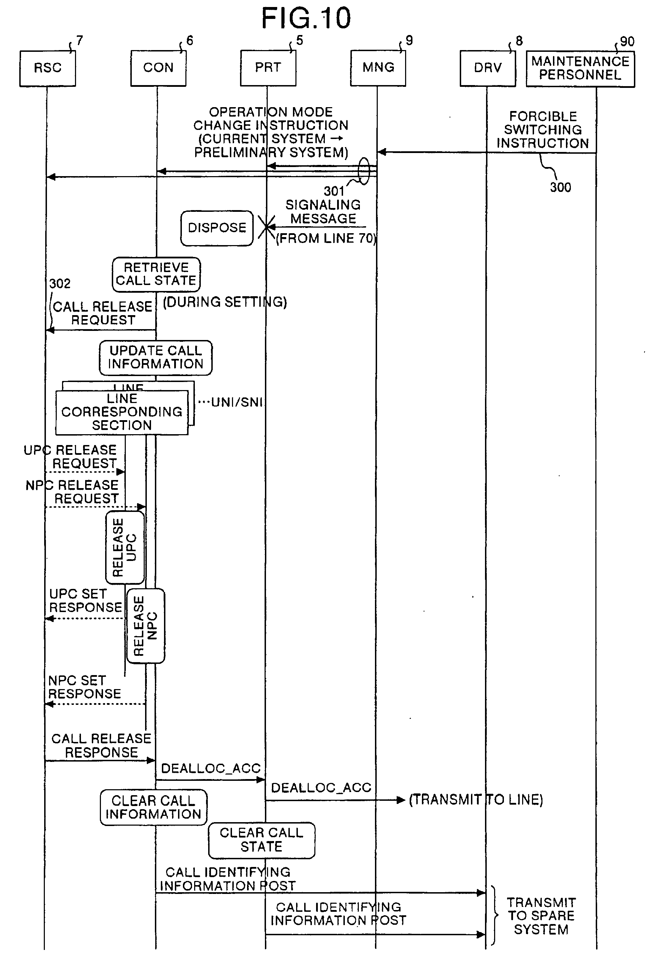

A third embodiment will be explained below. Since the structures of the ATM exchange and the monitor control section are the same as those in the first embodiment (see Fig. 1), the same reference numerals are given to them and the explanation thereof is omitted. Fig. 10 is a flow chart showing an operation of the main system monitor control section 4a when the SVC call is forcibly switched during the setting. For example, as for the switching system of the duplex monitor control section 4, there exist switching due to failure of the main system monitor control section 4a and forcible switching by means of an instruction from the maintenance personnel 402. In the case of the failure switching, switching is carried out during execution of the signaling process. Meanwhile, in the case of the forcible switching, immediate switching is not required, and switching is carried out when the state in the apparatus becomes stable.

The third embodiment relates to the forcible switching method. In Fig. 10, sequence management of the forcible switching process in the monitor control section 4 is carried out by the apparatus management module 9. The apparatus management module 9 posts forcible switching instruction 300 from the maintenance personnel 402 as operation mode change instruction (main system to spare system) 301 to the protocol processing module 5, the connection control module 6 and the resource management module 7 of the main system monitor control section 4a.

The protocol processing module 5 which receives this instruction disposes of all signaling messages from the line 401, and processes only message from the connection control module 6. Moreover, when the setting of SVC call and the release of SVC call are completed, as explained in the first embodiment, the spare system monitor control section 4b takes over the SVC call. Further, the protocol processing module 5 receives the message from the connection control module 6, and transmits call identifying informationpost including call identifying information of the SVC call to the spare system monitor control section 4b via the inter-system communication driver 8.

The connection control module 6 which receives the instruction retrieves the call information 11 of all SVC calls, and for example, in the case of the SVC call during setting, transmits call release request 302 for releasing the SVC call to the resource management module 7. The on-releasing SVC call is continuously subject to the releasing process. When the setting of SVC call and the releasing of SVC call are completed, as explained in the first embodiment, the spare system monitor control section 4b takes over SVC call. At the time when the SVC call is released in the signaling procedure, the connection control module 6 transmits call identifying information post including call identifying information of the SVC call to the spare system monitor control section 4b via the inter-system communication driver 8.

When the resource management module 7 receives the operation mode change instruction (main system to spare system) 301, it executes the same signaling process as that at the time of releasing shown in Fig. 4.

The same effects as the first embodiment are obtained in this third embodiment. Moreover, when the on-processing SVC call does not exist, the process of the main system monitor control section 4a is ended. Thereafter, the forcible switching instruction is posted to the spare system monitor control section 4b, and the spare system monitor control section 4b starts an operation as a main system monitor control section. At this time, the protocol processing module 5 of the main system monitor control section 4b disposes of all new messages other than one from the connection control module 6. The main system monitor control section 4a executes only the process relating to the on-processing SVC call. As a result, the SVC call can be switched in the stable state.

A fourth embodiment will be explained below. Since the structures of the ATM exchange and the monitor control section are the same as the first embodiment (see Fig. 1), the same reference numerals are given to them and the explanation thereof is omitted. The fourth embodiment will explains only an operation which is different form the third embodiment.

In this fourth embodiment, at the time when the protocol processing module 5 receives the operation mode change instruction (main system to spare system) 301, it retrieves the call state 10 of all SVC calls instead of disposing of all messages, and clears all the call states 10 of SVC call other than on-setting one. Thereafter, the spare system monitor control section 4b takes over the SVC call. The connection control module 6 and the resource management module 7 execute the same processes as the third embodiment.

The same effects as the first embodiment are obtained in this fourth embodiment in this fourth embodiment. Moreover, at the time when on-processing SVC does not exist, the process of the main system monitor control section 4a is ended, and the forcible switching instruction is posted to the spare system monitor control section 4b. The spare system monitor control section 4b starts an operation as new main system monitor control section. At this time, the protocol processing module 5 of the main system monitor control section 4a disposes of all new messages, and the main system monitor control section 4a executes only a process relating to on-processing SVC call. As a result, the SVC call can be switched in the stable state.

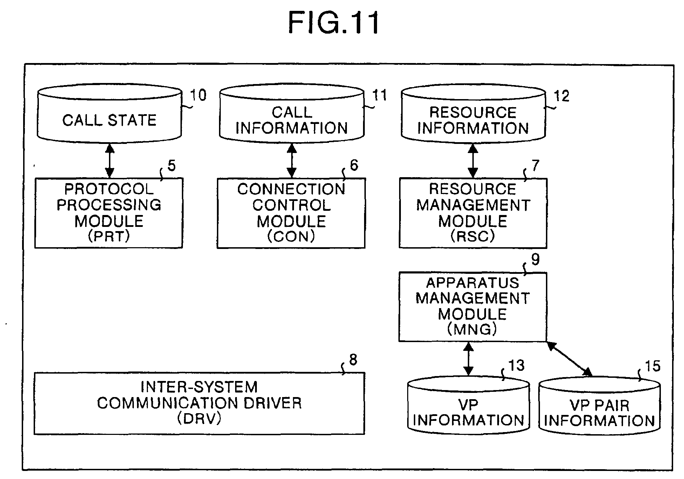

A fifth embodiment will be explained below. Fig. 11 is a diagram showing a structure of the monitor control section according to the fifth embodiment. In this fifth embodiment, in addition to the structure of the first embodiment, VP pair information 15 is managed by the apparatus management module 9. Since the structure of the ATM exchange is the same as the first embodiment (see Fig. 1), the same reference numerals are given and the explanation thereof is omitted.

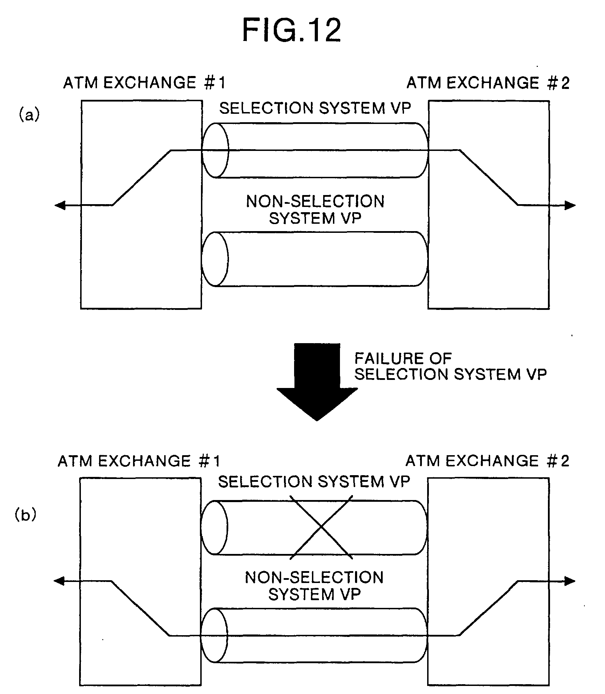

Fig. 12 is a diagram showing a concept of VP pair. For example, the VP pair are instructed from the maintenance personnel 402, and one VP is a selection system and the other VP is a non-selection system. Normally in ATM cell, a transmission process is executed by using the selection system VP (see Fig. 12(a)), however, when a failure occurs on the selection system VP, the selection system VP is switched to the non-selection system VP and the ATM cell is transmitted (see Fig. 12(b)). The VP pair information 15 is information which manages pair-set two VPs. In this fifth embodiment, the setting of the VP pair in a service node - access node interface (SNI) is considered.

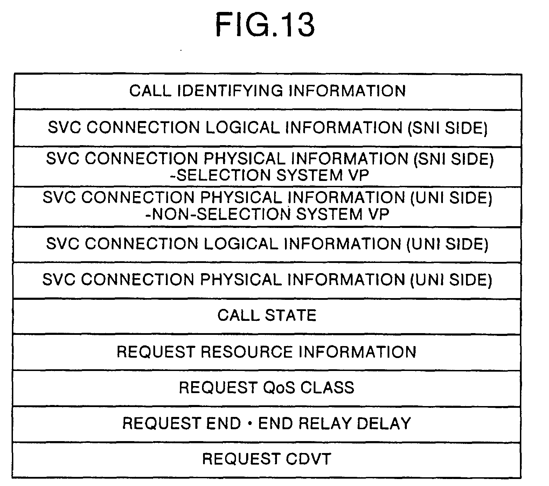

Fig. 13 is a diagram showing a concrete example of the call information which is managed by the connection control module 6. This is used for setting SVC call in both the pair-set VP selection system and non-selection system, and holds SNI side SVC connection physical information of the selection system VP and the non-selection system VP as SNI side SVC connection physical information. Only one piece of the SVC connection logical information exists regardless of existence/non-existence of pair setting.

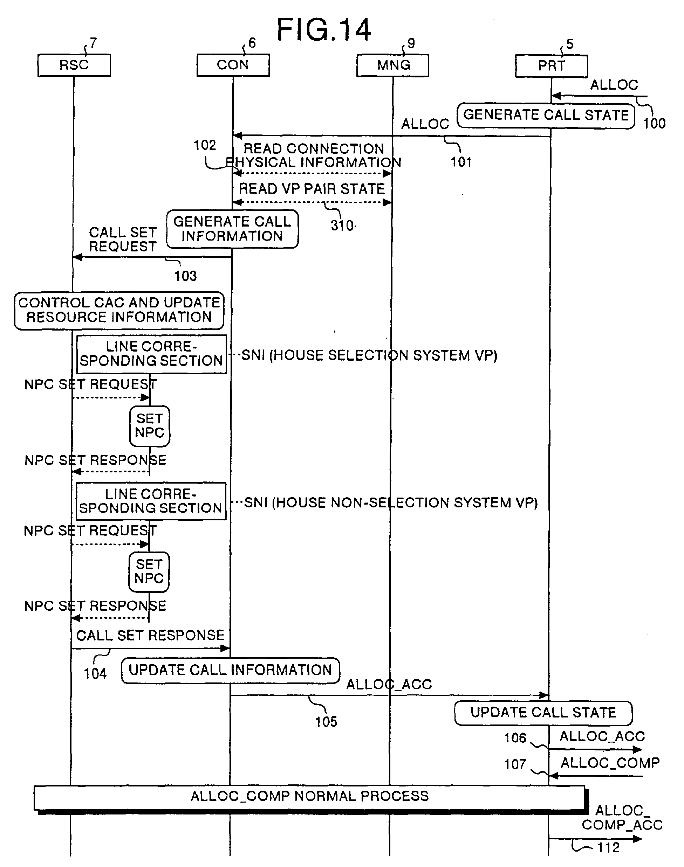

Fig. 14 is a diagram showing the signaling process flow in the access node at the time of setting SVC call in the state that the VP pair is set. For example, when the SVC call is set, the ALLOC message 100 received from the line 401 is transmitted to the main system monitor control section 4a via the line corresponding section 2 and the switch section 3. In the monitor control section 4a, the protocol processing module 5 generates the call state 10 of the SVC call according to the protocol process, and transmits ALLOC message 101 to the connection control module 6.

The connection control module 6 reads SVC connection logical information (VPCI/VCI) and connection physical information (interface number/VPI/VCI) 102 from the VP information 13 managed by the apparatus management module 9. Further, it reads a VP pair state 310 from the VP pair information 15, and recognizes the pair state of the SNI side VP so as to generate the call information 11 based on these pieces of information. At this time, when the pair is set, information about the selection system/non-selection system is managed as the call information 11. Thereafter, the connection control module 6 transmits call set request 103 including the VP information of both the pair set selection system and non-selection system to the resource management module 7.

The resource management module 7 which receives the call set request 103 sets hardware of the line corresponding section 2 and the switch section 3 on the SNI side and updates the resource information 12 in order to control CAC and set SVC connection. At the time of setting the hardware, the resource management module 7 sets VPs of both the selected selection system and non-selection system. At the stage that these processes are completed normally, the resource management module 7 transmits call set response 104 to the connection control module 6.

Next, the connection control module 6 which receives the call set response 104 transmits ALLOC_ACC message 105 to the protocol processing module 5. The protocol processing module 5 updates the call state 10, and transmits ALLOC_ACC message 106 to the line 401.

ALLOC_COMP message 107 received from the line 401 is transmitted via the line corresponding section 2 and the switch section 3 to the main system monitor control section 4a. The monitor control section 4a executes the same ALLOC_COMP normal process as the first embodiment.

The same effects as the first embodiment are obtained in this fifth embodiment. Moreover, the SVC connection is set for the VPs of both the pair-set selection system and non-selection system. As a result, the SVC call can be maintained also after the VP is switched.

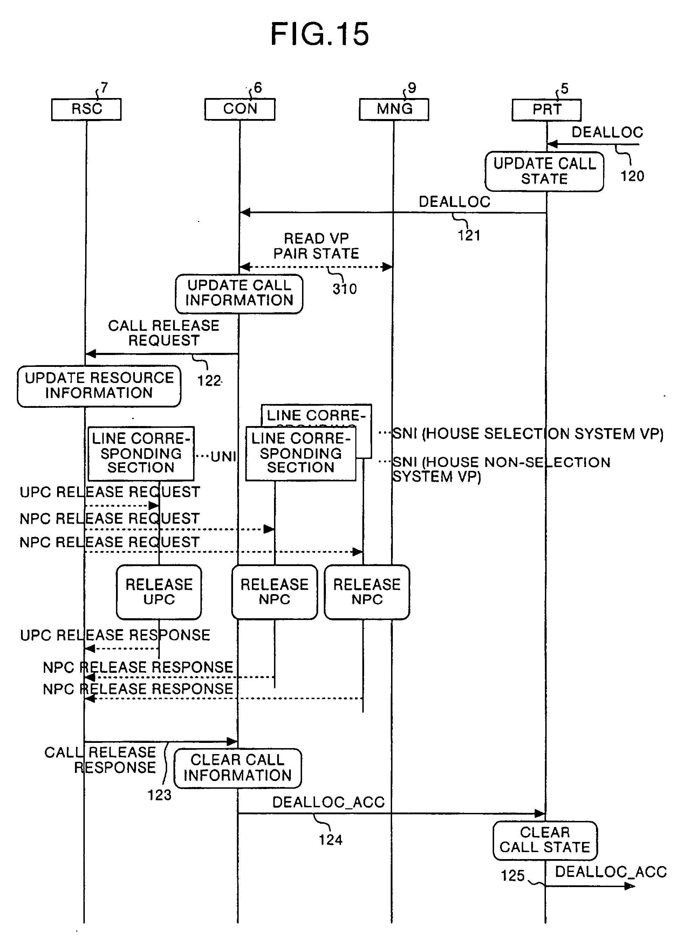

Fig. 15 is a signaling process flow in the access node at the time of releasing SVC call in the state that the VP pair is set. However, the VP pair is set after the SVC call is set, and in this case, the SVC connection is set in VPs of both the selection system and non-selection system. Further, the call information 11 of SVC call manages only information relating to one VP (VP which is set at the time of setting SVC call).

For example, the DEALLOC message 120 which is received from the line 401 is transmitted to the main system monitor control section 4a via the line corresponding section 2 and the switch section 3. In the monitor control section 4a, the protocol processing module 5 updates the call state 10 according to the protocol process, and transmits DEALLOC message 121 to the connection control module 6.

The connection control module 6 reads the VP pair state 310 from the VP pair information 15, and recognizes the pair state of SNI side VP so as to update the call information 11. Thereafter, the connection control module 6 transmits call release request 122 to the resource management module 7. Here, the VP information about both the pair-set selection system and non-selection system is posted. The resource management module 7 which receives the call release request 122 releases the setting of the hardware of the line corresponding section 2 and the switch section 3 where the SVC connection is set, and updates the resource information 12. When the setting of the hardware is released, the VPs of the specified selection system and non-selection system are released. At the stage that these processes are completed, the resource management module 7 transmits call release response 123 to the connection control module 6.

The connection control module 6 which receives the call release response 123 clears the call information 11, and transmits DEALLOC_ACC message 124 to the protocol processing module 5. The protocol processing module 5 which receives the DEALLOC_ACC message 124 clears the call state 10 and transmits DEALLOC_ACC message 125 to the line 401.

The same effects as the first embodiment are obtained in this fifth embodiment. Moreover, the SVC connection is released for the VPs of both the pair-set selection system and non-selection system. As a result, an omission of the connection release can be avoided.

A sixth embodiment will be explained below. The first embodiment explained the case where the VP pair are set before the setting and the release of SVC call are actuated. This sixth embodiment will consider a case in which the VP pair are set during execution of the setting and release of SVC call. Since the structures of the ATM exchange and the monitor control section are the same as the fifth embodiment, the same reference numerals are given to them and the explanation thereof is omitted.

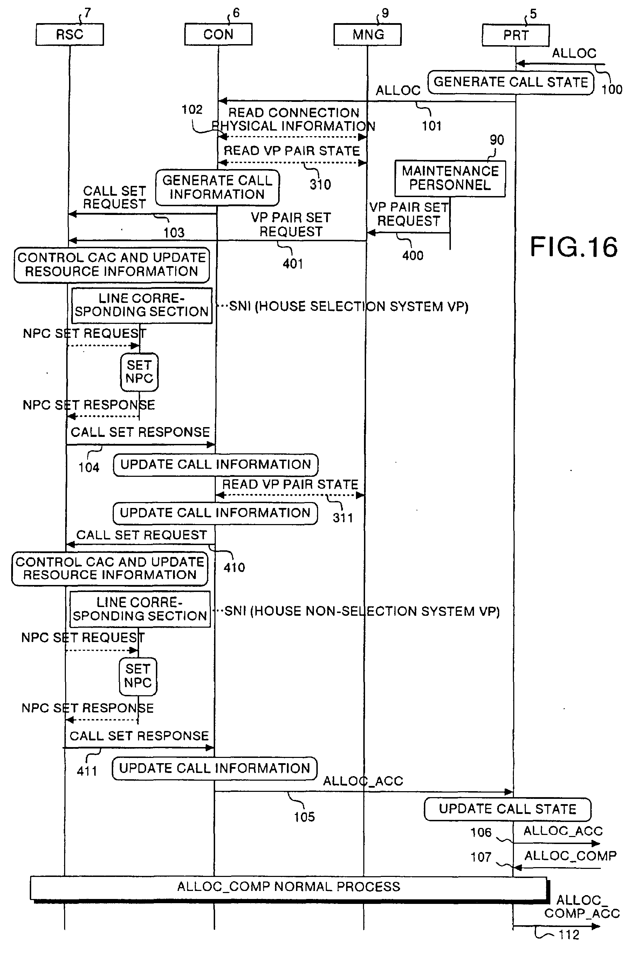

Fig. 16 is a diagram showing the signaling process flow in the access node at the time of setting SVC call. For example, when the SVC call is set, the ALLOC message 100 which receives from the line 401 is transmitted via the line corresponding section 2 and the switch section 3 to the main system monitor control section 4a. In the monitor control section 4a, the protocol processing module 5 generates the call state 10 of SVC call according to the protocol process, and transmits ALLOC message 101 to the connection control module 6.

The connection control module 6 reads logical information (VPCI/VCI) and physical information (interface number/VPI/VCI) 102 of SVC connection from the VP information 13 managed by the apparatus management module 9. Further, it reads VP pair state 310 from the VP pair information 15, and recognizes the pair state of the SNI side VP so as to generate the call information 11 based on these pieces of information. In this sixth embodiment, since the pair are not set at this time, only the information about the selection system is generated as the call information. Thereafter, the connection control module 6 transmits call set request 103 to the resource management module 7.

The resource management module 7 which receives the call set request 103 sets the hardware of the line corresponding section 2 and the switch section 3 on the SNI side and updates the resource information 12 in order to control CAC and set SVC connection. At the stage that these processes are completed normally, the resource management module 7 transmits call set response 104 to the connection control module 6.

Meanwhile, when VP pair set request 400 is transmitted from the maintenance personnel 402 until the call set response 104 is transmitted, the apparatus management module 9 updates the VP pair information 15, and transmits VP pair set request 401 to the resource management module 7. Since SVC does not exist in the pair-set VPs, the resource management module 7 does not particularly execute a process.

The connection control module 6 which receives the call set response 104 reads a VP pair state 311 again, and recognizes the pair state on the SNI side VP so as to update the call information 11. In this sixth embodiment, the pair are set at this time, and the information about the non-selection system VP is added as the call information. The connection control module 6 transmits call set request 410 to the resource management module 7. Here, only the VP information about the non-selection system of the pair-set selection system and non-selection system VPs is posted.

The resource management module 7 which receives the call set request 410 sets the hardware of the SNI side line corresponding section 2 and switch section 3 housed in the non-selection system VP and updates the resource information 12 in order to control CAC and set SVC connection. At the stage that these processes are normally completed, the resource management module 7 transmits the call set response 411 to the connection control module 6.

The connection control module 6 which receives the call set response 411 transmits ALLOC_ACC message 105 to the protocol processing module 5. The protocol processing module 5 updates the call state 10 and transmits ALLOC_ACC message 106 to the line 401.

ALLOC_COMP message 107 which is received from the line 401 is transmitted via the line corresponding section 2 and the switch section 3 to the main system monitor control section 4a. The monitor control section 4a executes the normally ALLOC COMP process which is the same as the first embodiment.

The same effects as the fifth embodiment are obtained in this sixth embodiment. Moreover, when the pair are set during the execution of SVC call, the enquiry is carried out again so that this setting can reflect the taking-over of call.

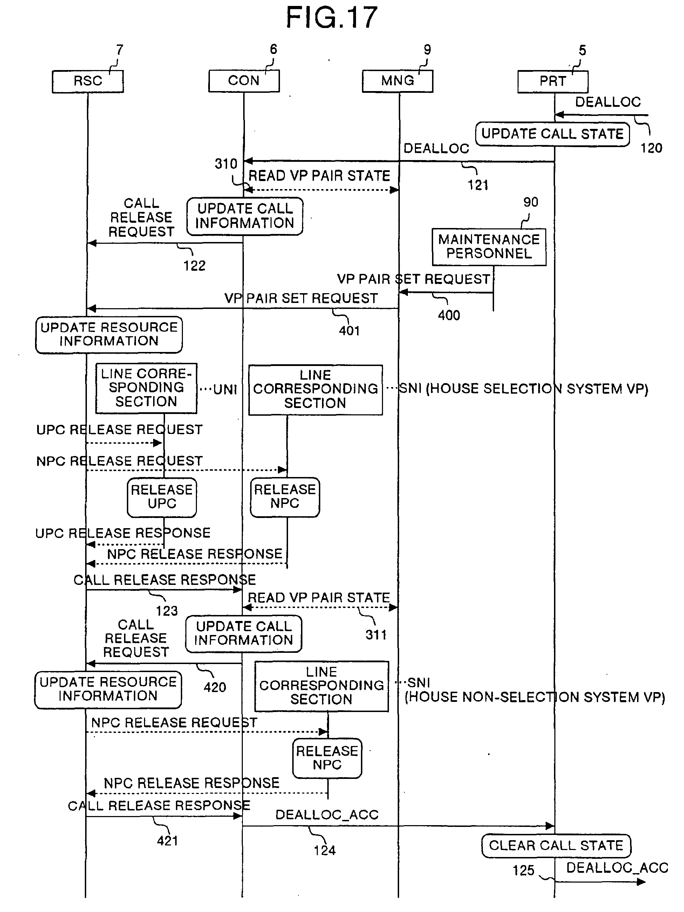

Fig. 17 is a diagram showing the signaling process flow in the access node at the time of releasing SVC call. For example, DEALLOC message 120 which is received from the line 401 is transmitted via the line corresponding section 2 and the switch section 3 to the main system monitor control section 4a. In the monitor control section 4a, the protocol processing module 5 updates the call state 10 according to the protocol process, and transmits DEALOC message 121 to the connection control module 6.

The connection control module 6 reads VP pair state 310 from the VP pair information, and recognizes a pair state of the SNI side VP. However, in this sixth embodiment, at this time, the pair are not set. Thereafter, the connection control module 6 transmits call release request 122 to the resource management module 7.

The resource management module 7 which receives the call release request 122 releases the setting of the hardware of the line corresponding section 2 and the switch section 3 where SVC connection is set, and updates the resource information 12. At the stage that these processes are completed, the resource management module 7 transmits call release request 123 to the connection control module 6.

Meanwhile, when VP pair set request 400 is transmitted from the maintenance personnel 402 until the call release response 123 is transmitted, the apparatus management module 9 updates the VP pair information 15, and transmits VP pair set request 401 to the resource management module 7. Since SVC exist in the pair-set VPs, the resource management module 7 sets the SVC connection in the non-selection system VP.

The connection control module 6 which receives the call release response 123 reads the VP pair state 311 again and recognizes the pair state of the SNI side VP so as to update the call information 11. In this sixth embodiment, at this time, since the pair are set, the information about the non-selection system VP is added as the call information. Thereafter, the connection control module 6 transmits call release request 420 to the resource management module 7. Here, only the information about the non-selection system VP of the pair-set selection system and non-selection VPs is posted.

The resource management module 7 which receives the call release request 420 releases the setting of the hardware of the line corresponding section 2 and the switch section 3 where SVC connection is set, and updates the resource information 12. At the stage that these processes are completed, the resource management module 7 transmits call release response 421 to the connection control module 6.

The connection control module 6 which receives the call release response 421 transmits DEALLOC_ACC message 124 to the protocol processing module 5, and clears the call information 11. Finally, the protocol processing module 5 which receives the DEALLOC_ACC message 124 clears the call state 10, and transmits DEALLOC_ACC message 125 to the line 401.

The same effects as the fifth embodiment are obtained in this sixth embodiment. Moreover, when the pair are set during the releasing of SVC call, the enquiry is carried out again so that the process can reflect the taking-over of call.

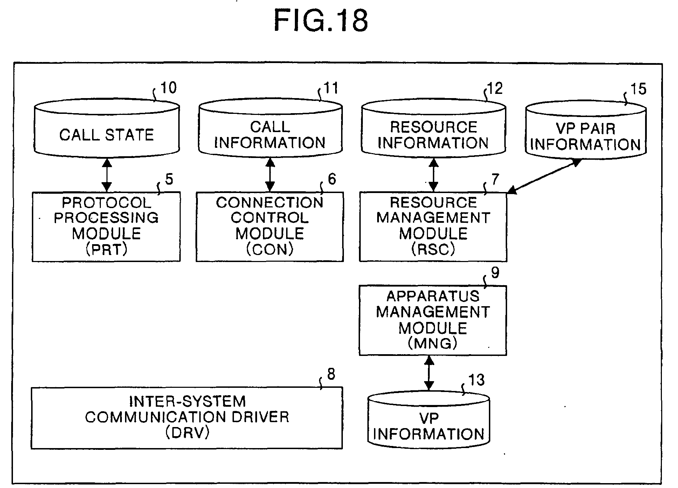

A seventh embodiment will be explained below. Fig. 18 is a diagram showing a structure of the monitor control section according to the seventh embodiment. In this seventh embodiment, the resource management module 7 manages the VP pair information 15. Since the structure of the ATM exchange is the same as the first embodiment (see Fig. 1), the same reference numerals are given and the explanation thereof is omitted.

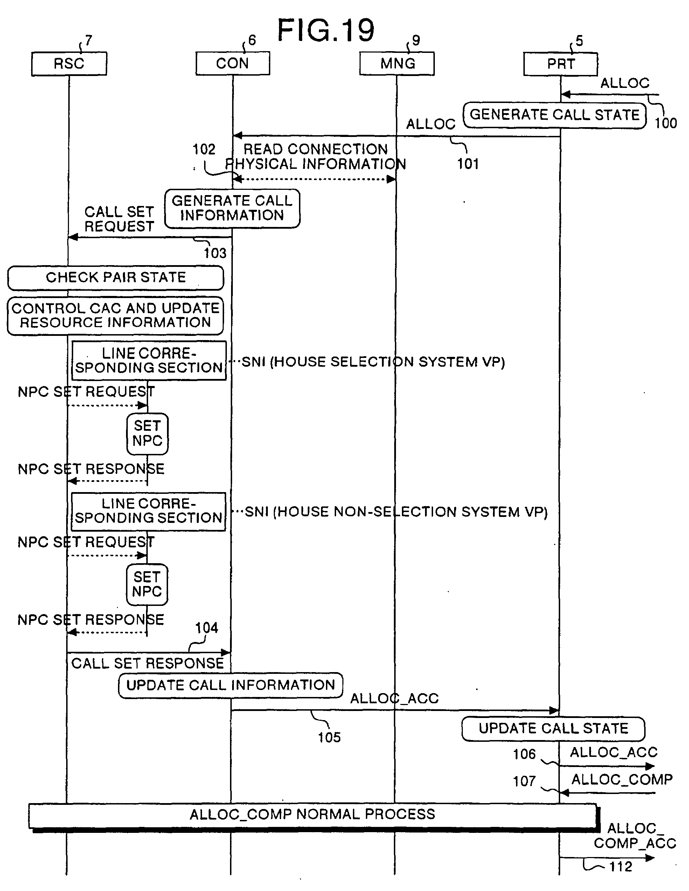

Fig. 19 is a diagram showing the signaling processing flow in the access node at the time of setting SVC call. For example, when the SVC call is set, ALLOC message 100 which is received from the line 401 is transmitted via the line corresponding section 2 and the switch section 3 to the main system monitor control section 4a. In the monitor control section 4a, the protocol processing module 5 generates the all state 10 of SVC call according to the protocol process, and transmits ALLOC message 101 to the connection control module 6.

The connection control module 6 reads logical information (VPCI/VCI) and physical information (interface number/VPI/VCI) 102 of SVC connection from the VP information 13 managed by the monitor module 9, and generates the call information 11. Thereafter, the connection control module 6 transmits call set request 103 to the resource management module 7.

The resource management module 7 which receives the call set request 103 retrieves pair state of the specified VP. The resource management module 7 sets the hardware of the line corresponding section 2 and the switch section 3 on the SNI side, and updates the resource information 12 in order to control CAC and set SVC connection. When the pair are set at the time of setting the hardware, VPs of both the selection system and non-selection system are set. At the stage that these processes are normally completed, the resource management module 7 transmits call set response 104 to the connection control module 6.

The connection control module 6 which receives the call set response 104 transmits ALLOC_ACC message 105 to the protocol processing module 5. The protocol processing module 5 updates the call state 10, and transmits ALLOC_ACC message 106 to the line 401.

ALLOC_COMP message 107 which is received from the line 401 is transmitted via the line corresponding section 2 and the switch section 3 to the main system monitor control section 4a. The monitor control section 4a normally executes the same ALLOC_COMP process as the first embodiment.

The same effects as the first embodiment are obtained in this seventh embodiment. Moreover, SVC connection is set in VPs of both the pair-set selection system and non-selection system so that SVC call can be maintained after switching VP.

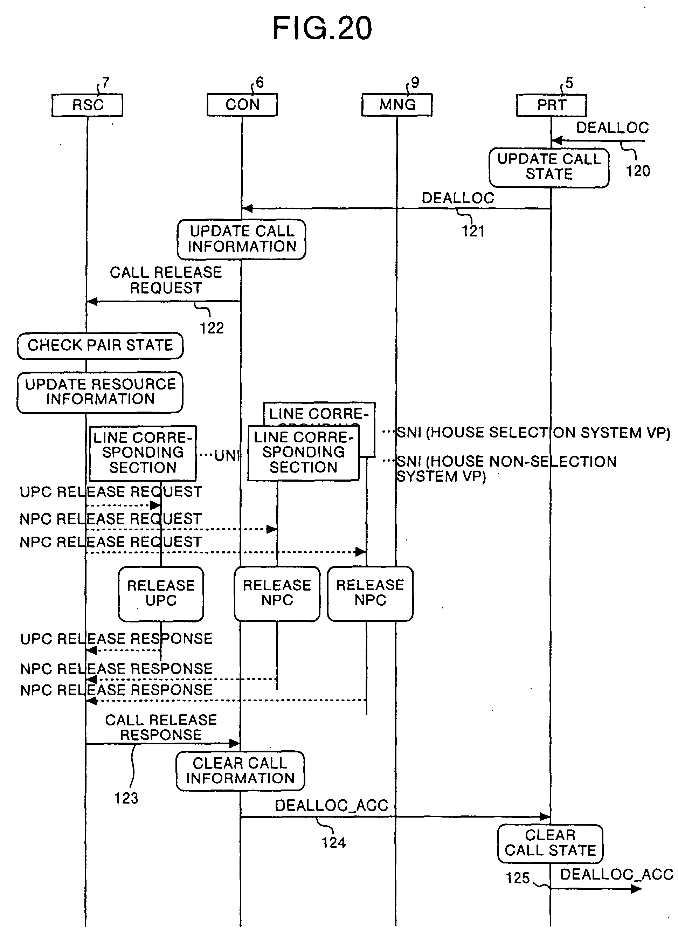

Fig. 20 is a diagram showing the signaling process flow in the access node at the time of releasing SVC call. DEALLOC message 120 which is received from the line 401 is transmitted via the line corresponding section 2 and the switch section 3 to the main system monitor control section 4a. In the monitor control section 4a, the protocol processing module 5 updates the call state 10 according to the protocol process, and transmits DEALLOC message 121 to the connection control module 6.

The connection control module 6 updates the call information 11, and transmits call release request 122 to the resource management module 7. The resource management module 7 which receives the call release request 122 retrieves the pair state of the specified VP. Thereafter, the resource management module 7 releases the setting of the hardware of the line corresponding section 2 and the switch section 3 where SVC connection is set, and updates the resource information 12. When the pair are set at the time of releasing the setting of the hardware, the resource management module 7 releases the setting of VPs of both the selection system and non-selection system. At the stage that these processes are completed, the resource management module 7 transmits call release response 123 to the connection control module 6.

The connection control module 6 which receives the call release response 123 clears the call information 11, and transmits DEALLOC_ACC message 124 to the protocol processing module 5. The protocol processing module 5 which receives the DEALLOC_ACC message 124 clears the call state 10, and transmits DEALLOC_ACC message 125 to the line 401.

The same effects as the first embodiment are obtained in this seventh embodiment. Moreover, the SVC connection of the VPs of the pair-set selection system and non-selection system is released so that omission of the release of the connection can be avoided.

### INDUSTRIAL APPLICABILITY

As mentioned above, the ATM exchange of the present invention is useful to an ATM network which is capable of providing SVC service. Particularly, the ATM exchange is suitable as an exchange which should continue the protocol process even after SVC call is switched from the main system to the spare system, and an exchange which should maintain SVC call even after VP is switched.

## Claims

1. An ATM exchange comprising:
a monitor control unit having a duplex configuration composed of a main system and a spare system capable of executing a call process, wherein said monitor control unit includes
a protocol processing module which manages a call state for each call and executing a protocol process for these calls;
a connection control module which manages call information composed of logical information and physical information and request resource information of a user connection for each call; and
a resource management module which manages a resource state of a whole apparatus,
wherein when a SVC call is taken over at the time of setting the SVC call, said main system transmits the call state and the call information to said spare system at a point of time when the SVC call is established, and said spare system sets the received call state and call information and updates a resource state based on the resource information included in the call information, and
when the SVC call is taken over at a point of time when the SVC call is released, said main system transmits call identifying information of the SVC call at a point of time when the SVC call is released, and said spare system deletes the call state and the call information shown by the received call identifying information and updates the resource state based on the resource information included in the call identifying information.

2. The ATM exchange according to claim 1, further comprising a scheduler which distributes the call state and the call information, wherein
in said main system which receives call process request message, said scheduler stores the message thereinto and instructs the protocol process, and at a point of time when the call process is completed, transmits the stored call process request message to said spare system, and
in said spare system, said scheduler which receives the message updates the call state, the call information and the resource information according to the same protocol process as said main system.

3. The ATM exchange according to claim 1, wherein when said main system receives monitor control section switching instruction,
in said main system,
said protocol processing module does not admit all messages other than one from said connection control module, and
when a call is generated during setting, said connection control module actuates a releasing process for the call, and when a call is generated during release, continues the releasing process for the call; and
in said spare system, after all the call processes are completed, a switching process is executed in the state that a on-processing call does not exist.

4. The ATM exchange according to claim 1, wherein when said main system receives monitor control section switching instruction,
in said main system,
said protocol processing module does not admit all messages, and when a call is generated during setting and release, clears the call state and posts call identifying information of the released call to said spare system; and
when a call is generated during setting, said connection control module actuates a releasing process for the call, and when a call is generated during release, continues the releasing process for the call,
after all the call processes are completed, in said spare system, a switching process is executed in the state that on-processing call does not exist.

5. The ATM exchange according to claim 1, further comprising an apparatus management module which manages a corresponding relationship between logical information and physical information of a virtual path and managing a pair state of all set virtual paths,
wherein at the time of setting the call, said connection control module makes an inquiry to said apparatus management module about the pair state of the virtual paths, and when a pair are set, allows call set request message for said resource management module to include virtual path information of both selection system and non-selection systems,
at the time of releasing the call, said connection control module executes the inquiry, and when the pair are set, allows call release request message for said resource management module to include the virtual path information of both the selection system and non-selection system, and
said resource management module sets/releases the call for the virtual paths of both the selection system and non-selection system.

6. The ATM exchange according to claim 5, wherein
when the pair are set during the call setting after the inquiry, said connection control module receives call set response message from said resource management module, and executes the same inquiry again, and allows the call set request message for said resource management module to include the virtual path information of the non-selection system, and
when the pair are set during releasing of the call setting after the inquiry, said connection control module receives call release response message from said resource management module and executes the inquiry again, and allows the call release request message for said resource management module to include the virtual path information of the non-selection system.

7. The ATM exchange according to claim 1, wherein said resource management module manages pair states of set all virtual paths, and at the time of setting call, when the pair of the virtual paths are set, sets the call in the virtual paths of both selection system and non-selection system, and at the time of releasing the call, when the pair of the virtual paths are set, releases the call of the virtual paths of both the selection system/non-selection system.

8. A reliability improvement method of an ATM exchange having a duplex configuration monitor control section composed of a main system and a spare system capable of executing a call process, the method comprising:
the first transmission step of, when a SVC call is taken over at the time of setting the SVC call, allowing said main system to transmit call information including a call state and resource information to said spare system at a point of time when the SVC call is established;
the first updating step of allowing said spare system to set the received call state and call information and update a resource state based on the resource information included in the call information;
the second transmission step of, when the SVC call is taken over at a point of time when the SVC call is released, allowing said main system to transmit call identifying information of the call at the time when the SVC call is released; and
the second updating step of allowing said spare system to delete a call state and call information shown by the received call identifying information and update the resource state based on the resource information included in the call identifying information.

9. The reliability improvement method according to claim 8, further comprising:
the third transmission step of allowing said main system which receives call processing request message to store the message therein and instructs a protocol process, and at a point of time when the call process is completed, transmits the stored call processing request message to said spare system; and
the third updating step of allowing said spare system which receives the message to updates the call state, the call information and the resource information according to the same protocol process as said main system.

10. The reliability improvement method according to claim 8, further comprising:
the releasing step of, when said main system receives monitor control section switching instruction, allowing said main system not to admit all messages from a line, and when a call is established during the setting, to actuate a releasing process for the call, and when the call is established during the release, to continue the releasing process for the call; and
the switching step of, after all the call processes are completed, allowing said spare system to execute a switching process in a state that the on-processing call does not exist.

11. The reliability improvement method according to claim 8, further comprising:
the call setting step of, when the pair of the virtual paths are set at the time of setting call, setting call in virtual paths of both selection system and non-selection system; and
the call releasing step of, when the pair of the virtual paths are set at the time of releasing call, releasing call of the virtual paths of both the selection system and non-selection system.
